# EUROPEAN PATENT SPECIFICATION

(11) **EP 0 471 443 B1**
(45) Date of publication and mention of the grant of the patent: **17.05.1995**
(21) Application number: 91306187.5
(22) Date of filing: 08.07.1991
(51) Int. Cl.: B01J 20/28, B01D 53/26

(54) **Method of manufaturing an active silica gel honeycomb adsorbing body usable in the atmosphere of 100% of relative humidity**
Methode zur Herstellung eines adsorbierenden Wabenkörpers aus aktivem Silicagel, verwendbar in einer Atmosphäre mit 100% relativer Feuchtigkeit
Méthode de fabrication d'un corps absorbant en gel de silice actif sous forme de nid d'abeille, utilisable dans une atmosphère de 100% d'humidité relative

(30) Priority: 12.08.1990 JP 214155/90
(43) Date of publication of application: 19.02.1992
(73) Proprietor: KABUSHIKI KAISHA SEIBU GIKEN, Kasuya-gun, Fukuoka 811-24 (JP); Kuma, Toshimi, Fukuoka-shi Fukuoka 813 (JP)
(72) Inventor: Kuma, Toshimi, Fukuoka-shi, Fukuoka 813 (JP)
(74) Representative: Johnson, Terence Leslie

(56) References cited:
- US-A- 4 162 934
- US-A- 4 871 607
- US-A- 4 911 775
- US-A- 4 926 618
- JAPANESE PATENTS GAZETTE Week 8626, 20 May 1986 DerwentPublications Ltd., London, GB;JP-A-61 101 228 (SEIBU GIKEN) 20 May 1986

## Description

The present invention relates to a method of manufacturing an active silica gel honeycomb adsorbent body for dehumidification of air or other inactive gases or adsorption of active gases in air or other inactive gases by forming a honeycomb structure laminated body with solid adsorbent which adsorbs and desorbs humidity or other active gases reversibly, the dehumidification and other adsorptions being proceeded by passing process gas and reactivation gas alternately through small channels of said honeycomb structure laminated body in order to obtain dehumidified gas such as dry air or purified air continuously, said honeycomb adsorbing body being usable in the atmosphere of 100% of relative humidity.

The present inventor et al have applied for a Japanese Patent (Application No. 206849/1984) for manufacture of a strong adsorbing body for humidity exchange mainly consisting of silica aerogel with matrix of inorganic fiber paper by laminating low density papers of bulk density 0.3 - 0.6 g/cm³ mainly consisting of inorganic fiber selected from the group consisting of ceramic fiber, glass fiber and mixture of them to form a rotor with many small channels, impregnating the laminate with water glass, heating and drying the laminate at the temperature of 50 - 90°C until said water glass becomes hydrated water glass state with water content of 3 - 20%, soaking the laminate in acid to produce silica hydrogel in fiber gaps of a honeycomb structure formed body, and washing and drying the laminate.

Also, the present inventor et al disclosed in US-A-4,871,607 a humidity exchanger element comprising a matrix formed by laminating single-faced corrugated sheets and an active silica-alumina aerogel just synthesized and adhered on said sheets and on the gap between the fibers of said sheets; the main constituents of said sheet being an inorganic fiber selected from the group consisting of ceramic fiber, glass fiber, slag fiber, carbon fiber and mixture of them, the thickness of said sheet being in the range of 0.18-0.25mm, the wave length of said corrugated sheet being in the range of 2.5 - 4.2mm, and the wave height of said corrugated sheet being in the range of 1.5 - 2.3mm; and the composition of said aerogel being 97 - 85% of silicon dioxide and 3 - 15% of aluminum oxide.

In a so-called honeycomb type rotor like US-A-4,871,607 which adsorbs humidity or other active gases on wall surfaces of such many small channels, when the size of small channels is too small, the area of wall surface contacting with passing gas is large and a high adsorption rate can be obtained, but fluid resistance in passing through small channels is high and power necessary for operation becomes high. On the other hand when the size of small channels is too large, fluid resistance of gas passing through said small channels is low and power necessary for operation becomes low, but the area of wall surface contacting with passing gas is small, so that few of the molecules of humidity or other active gases in inactive gas streams such as air contact the surface of the small channels, and the adsorption rate becomes low. In order to raise the adsorption rate, it is necessary to lower the flow speed of gas and this brings about a disadvantage in that the capacity to adsorb the active gases in the process air per unit time decreases. The size and the quantity, i.e., the surface area of micropores of silica gel also affect adsorption capacity greatly.

It is accordingly an object of the invention to seek to mitigate these disadvantages.

According to a first aspect of the invention there is provided a method of manufacturing an active silica gel honeycomb adsorbing body usable for a process air having substantially 100% of relative humidity, which is characterized by winding up and laminating a single-faced corrugated sheet of wave length 2.5 - 4.5mm and wave height 1.3 - 2.5mm made of inorganic fiber papers of bulk density 0.3 - 0.6 g/cm³ (30 ∼ 180 g/m²) and thickness 0.1 - 0.3mm into a honeycomb structure laminated body, firing the laminated body, impregnating the laminated body with aqueous water glass solution and soaking the laminated body in an acid after said water glass is dried in order to chemically synthesize and bind active silica gel having micropores whose diameter is mainly distributed in the range of 20 - 40 Å and whose surface area is 300 - 600m²/gr in fiber gaps and on the surface of the inorganic fiber paper by the chemical reaction of water glass and acid to obtain an adsorbing body mainly consisting of said active silica gel.

Using the invention it is possible to provide a method of manufacturing an active silica gel honeycomb adsorbing body which has high efficiency of dehumidification or adsorption of other active gases and a relatively low resistance to gas flow in small channels and also which can be operated in an atmosphere of 100% of relative humidity by testing an active silica gel honeycomb adsorbing body in a range of standard conditions of the rotor width, i.e., the length of a small channel being 200 - 400mm, flowing velocity of process gas and reactivation gas at the inlet being 0.5 - 4 m/sec. and rotor rotation speed being 10 - 20 r.p.h., for example, changing variously the size of the small channels of the rotor, the size and surface area of silica gel micropores and so on, and by limiting wave length of a single-faced corrugated sheet to 2.5 - 4.5 mm, height to 1.3 - 2.5 mm (amplitude), main distributing range of micropore diameter to 20 - 40 Å and surface area to 300 - 600 m²/gr.

It will be understood that the invention extends to a silica gel honeycomb adsorbing body, made by a method as hereinbefore defined, and to a dehumidifier made from an adsorbing body as hereinbefore defined.

An adsorbing body of the present invention is an adsorbing body obtained by synthesizing silica gel in a honeycomb shape, and it has a characteristic that it does not adsorb more humidity or other active gases after it has already adsorbed enough active gases. Therefore, the adsorbing body of the present invention can be operated in the atmosphere of 100% of relative humidity as described above.

Drawings show examples of the present invention:
Fig.1 is a sectional explanatory drawing showing the first process of the present invention;
Fig.2 is a perspective view of an active silica gel honeycomb adsorbing body obtained by the present invention;
Fig.3 is a partial cutaway perspective view of a dehumidifier constructed using the honeycomb adsorbing body of Fig.2;
Fig.6 is a sectional view showing a part of a single-faced corrugated sheet;

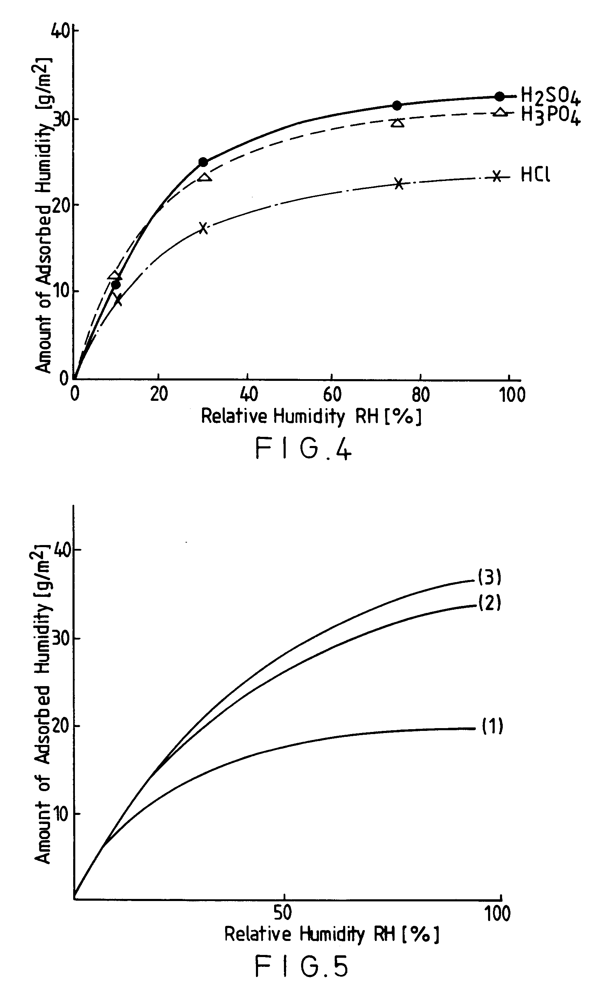

Figs. 4 and 5 and Figs. 7 & 8 are graphs showing capacities of an active silica gel honeycomb adsorbing body obtained by the present invention;

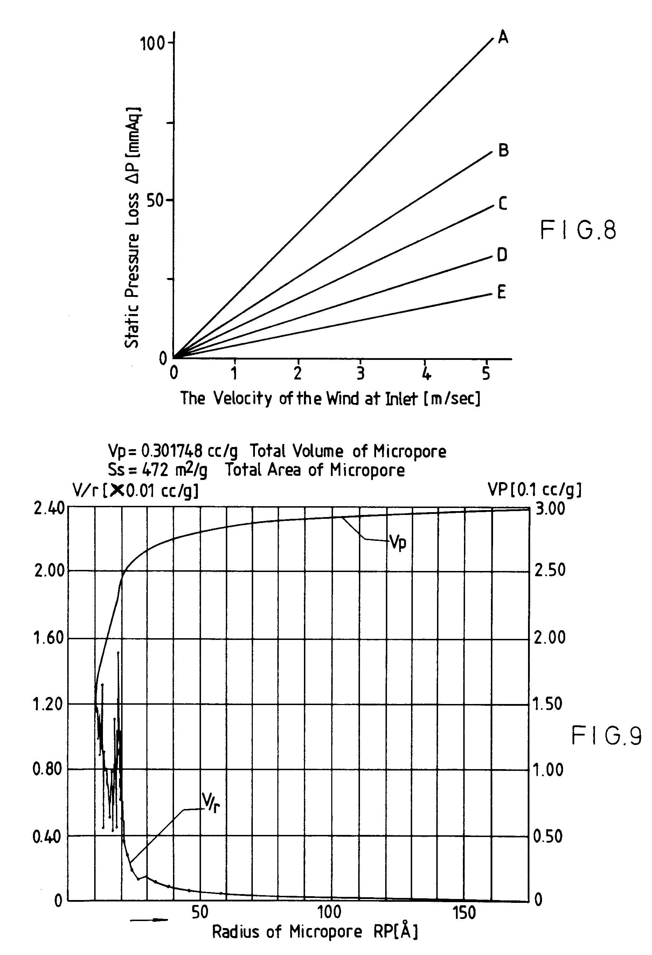

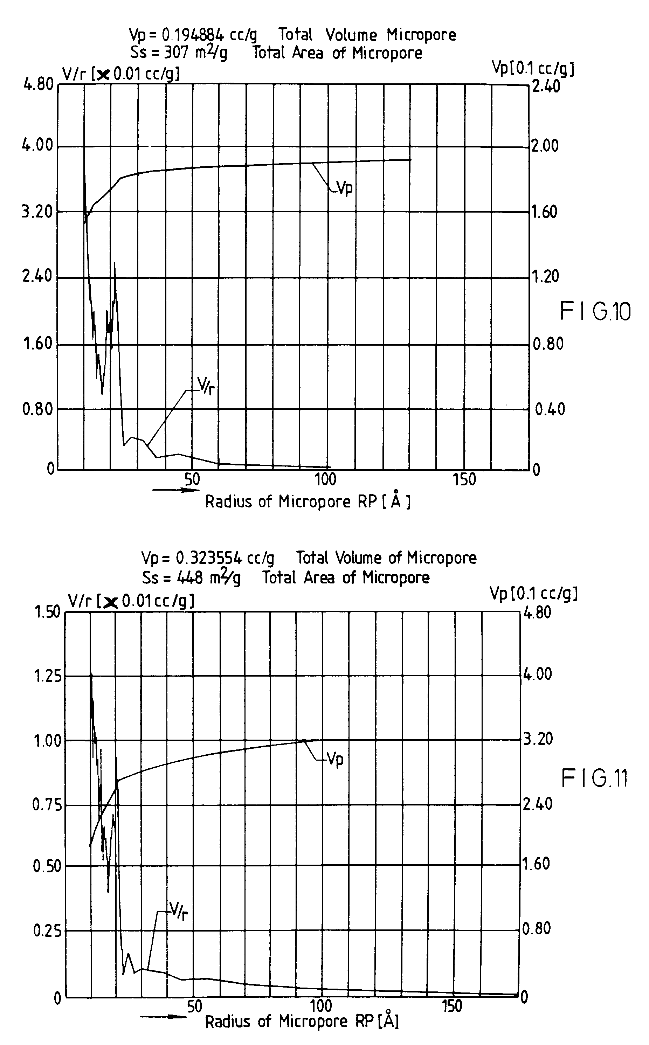

Figs. 9 - 11 are graphs showing diameter distribution and volume of micropores in active silica gel of an active silica gel honeycomb adsorbing body obtained by the present invention.

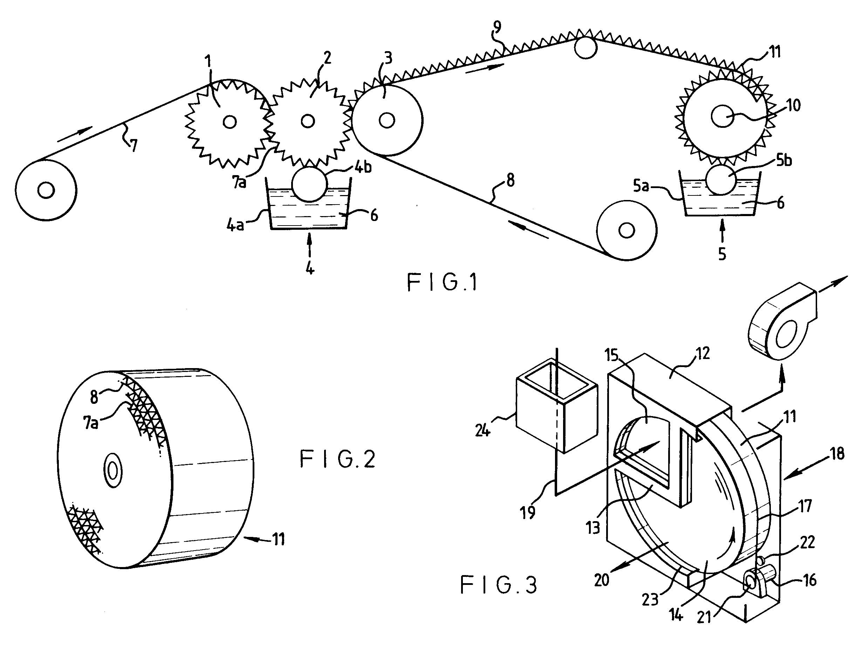

Fig.1 shows an example of an equipment used in the first process, i.e., the forming process in the present invention. In the drawing, 1 and 2 are a pair of forming gears with desired teeth that mesh with each other, and a pressure roller 3 is urged against forming gear 2. The surface velocities of the gear 2 and the roller 3 are almost the same. In the drawing, 4 and 5 are adhesive applicators and consist of adhesive vessels 4a, 5a and adhesive applying rollers 4b, 5b respectively. The adhesive vessels 4a, 5a contain adhesive 6, 6 in which the adhesive applying rollers 4b, 5b are partially soaked and the adhesive applying roller 4b is mounted close to the forming gear 2.

Very porous papers 7, 8 of 200mm width are provided in rolls as shown in the drawing, which consist of short ceramic fiber of 0.2 - 5» fiber diameter 80% (length of fiber: 2 ∼ 5mm for example), pulp 10% and binder 10% (each weight percent) and which are 0.2mm thick with bulk density less than 0.5 g/cm³. A paper 7 is applied between the forming gears 1 and 2 to form corrugated paper 7a with wave length 3.4mm and wave height 1.8mm and then is supplied into the engaging portion of the forming gear 2 and the adhesive applying roller 4b to apply adhesive 6 to the ridged portion of the corrugated paper 7a. The corrugated paper 7a and the flat liner paper 8 are brought together between the forming gear 2 and the pressure roller 3 to obtain a single-faced corrugated sheet 9 by bonding the papers 7a and 8 together. Adhesive 6 is applied to the ridged portion of the single-faced corrugated sheet 9 by the adhesive applying roller 5b of the adhesive applicator 5. The single-faced corrugated sheet 9 is then rolled up around core 10 to obtain a cylindrical honeycomb structure laminated body 11 with many small channels penetrating through between both end surfaces as shown in Fig.2.

The obtained honeycomb structure laminated body 11 is fired for 5 hours in the air with reduced content of oxygen, preferably less than 10% of oxygen content, at 300 ∼ 700°C in order to remove organic components contained in the paper and the adhesive so that bulk density of the paper becomes about 0.45 g/cm³ (90 g/m² in the case of 0.2mm thick), then soaked in water glass (weight percent ratio of SiO₂ and Na₂O is 34 ∼ 36 : 14 ∼ 15) aqueous solution (specific gravity 1.5, 30°C) for full impregnation, and then dried for about 1 hour by hot air wind of about 70°C to convert water glass to hydrated water glass of water content 12%. Then it is soaked for 3 hours in 20% aqueous solution of sulfuric acid at 50°C, and silica hydrogel is produced and combined in ceramic fiber gaps by the reaction of (Na₂O) x (SiO₂)y + H₂SO₄→SiO₂ + Na₂SO₄ + H₂O. It is then washed and dried to obtain an active silica gel honeycomb adsorbing body mainly consisting of active silica gel with a matrix of inorganic fiber paper. When the chemical reaction is lead under the above-mentioned conditions, micropore diameters in honeycomb structure active silica gel chemically synthesized are mainly distributed in the range of 20 - 40 Å and its surface area is 448 m²/gr. The concentration and the temperature of the acid used are important: when the acid temperature is low ( 0°C - 10°C), the total surface area of micropores becomes small and adsorbing capacity decreases; when it is too high (above 80°C), silica gel producing reaction proceeds too fast and the single-faced corrugated sheet tends to be deformed or many cracks tend to grow on the surface. On the other hand when the concentration of the soaking acid is too high (above 50%), the total surface area of micropores becomes small and adsorbing capacity decreases; and furthermore the single-faced corrugated sheet of the rotor is deformed or cracks grow on its surface, and no satisfactory product can be obtained.

Fig.3 shows a dehumidifier constructed using the honeycomb adsorbing rotor 11: The honeycomb dehumidifying rotor 11 is held rotatively in a casing 12 and is divided by a separator 13 into a process zone 14 and a reactivation zone 15. The rotor 11 is rotated by a geared motor 16 and the drive belt 17, and highly humid process air 18 is sent into the process zone 14 and hot reactivation air 19 into the reactivation zone 15 to dehumidify the process air 18 to obtain dry air 20. In the drawing, 21 is a pulley, 22 is a tension pulley, 23 is a rubber seal, and 24 is a reactivation air heater. As used herein the term "process air" is intended to refer to raw untreated air for processing to give dehumidified air.

Table 1 shows data of a rotor obtained by using 15% aqueous solution of sulfuric acid, hydrochloric acid and phosphoric acid (temperature 25 - 30°C), and No. 1 water glass (specific gravity 1.5) according to the example mentioned above and by producing silica gel bound to ceramic fiber paper of 0.2mm thickness and of 86 g/m² after firing, (107 g/m² before firing).

**Table 1**

| Acid | Sulfuric Acid | Phosphoric Acid | Hydrochloric Acid |
|---|---|---|---|
| Weight (per unit area) of the Sheet after Production of Silica (g/m²) | 210 | 208 | 208 |
| Amount of Adhered Silica Gel (%) | 144.6 | 142.2 | 142.2 |
| Micropore Diameter (Å) | 20-40 | 25-45 | 25-50 |
| Micropore Surface Area (m²/g) | 472 | 456 | 378 |

Fig.4 shows equilibrium humidity adsorbing amount per unit surface area (g/m²) of the sheet forming this rotor. The temperature in adsorption test is 20 ± 2°C.

Table 2 shows data of silica gel fixed in a rotor obtained by using 15% aqueous solution of sulfuric acid and No. 1 water glass (specific gravity 1.5) according to the example mentioned above and by changing variously the temperature of sulfuric acid at the time of soakage.

**Table 2**

| | (1) | (2) | (3) |
|---|---|---|---|
| Temperature of Sulfuric Acid | 0 - 4°C | 45-50°C | 85-100°C |
| Weight (per unit area) of the Sheet after Production of Silica (g/m²) | 205 | 209 | 212 |
| Amount of Adhered Silica Gel (%) | 138.9 | 143.3 | 146.2 |
| Micropore Diameter (Å) | 20 - 45 | 25 - 45 | 25 - 50 |
| Micropore Surface Area (m²/g) | 307 | 448 | 476 |

Fig. 5 shows equilibrium humidity adsorbing amount per unit surface area (g/m²) of the sheet forming this rotor. As shown in Fig. 5, the higher the temperature of sulfuric acid which reacts with water glass is, the larger the micropore surface area becomes and accordingly humidity adsorbing amount and dehumidification capacity increase.

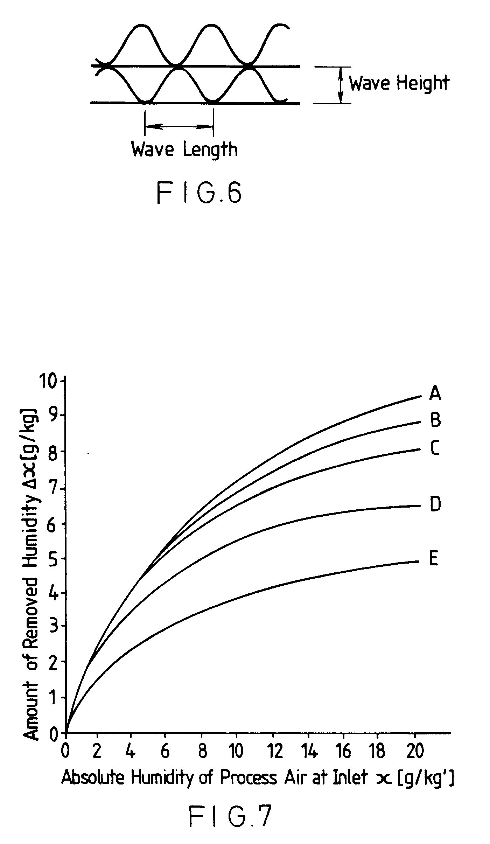

Fig. 7 shows dehumidification capacity of a dehumidifier shown in Fig. 3 constructed using an adsorbing rotor manufactured using inorganic fiber paper of 0.3 g/cm³ bulk density and 0.20mm thickness, making rotor diameter 320mm, rotor width, i.e., length of small channels 200mm, and wave length and wave height (Fig.6) of corrugated sheet 7a as follows:

| | Wave Length (mm) | Wave Height (mm) |
|---|---|---|
| A | 2.0 | 1.0 |
| B | 2.5 | 1.3 |
| C | 3.5 | 1.9 |
| D | 4.5 | 2.5 |
| E | 5.0 | 2.8 |

and using No. 1 water glass aqueous solution (specific gravity 1.5) and 15% sulfuric acid aqueous solution (temperature 50°C) with the rest of conditions being same as those of the example, when wind velocity of process air 14 and reactivation air 15 at each inlet is 2.0 m/sec. respectively, the ratio of reactivation air volume and process air volume is 1 : 3, rotor rotation speed is 18 r.p.h., the temperature of process air at the inlet is 25°C, absolute humidity of process air at the inlet is 4 - 19 g/kg', the temperature of reactivation air at the inlet is 140°C, and absolute humidity of reactivation air at the inlet is same as that of process air at the inlet.

In the drawing, the abscissa shows absolute humidity (g/kg') of process air at the inlet and the ordinate shows amount of removed humidity ΔX (g/kg) per amount of process air, i.e., dehumidification capacity, and it is seen that dehumidification capacity satisfactory as a dehumidifier can be obtained when wave length and wave height of the corrugated sheet are not more than 4.5mm and 2.5mm respectively (D).

Fig. 8 shows pressure loss ΔP (mmAq) when wind velocity of process air and of reactivation air at the element inlet is 0.5 - 3 m/sec. and the rest of the conditions are the same as the above. In the drawing the abscissa shows wind velocity (m/sec.) of process air and of reactivation air at the inlet and the ordinate shows pressure loss ΔP (mmAq). When wave length is less than 2.5mm, for example 2.0mm, and wave height is less than 1.3mm, for example 1.0mm (A in Fig.8), pressure loss increases and power cost for dehumidifier operation increases greatly. Therefore it can be seen that the range where wave length and wave height of the single-faced corrugated sheet are 2.5 - 4.5mm and 1.3 - 2.5mm respectively, main distribution range of silica aerogel micropore diameter is 20 - 40Å, and the surface area of the micropore is 300 - 600 m²/gr is the range where dehumidification efficiency is high without any manufacturing problems and where a dehumidifier can be economically operated. It can be seen that particularly the case when wave length is 3.5mm and wave height is 1.9mm is favorable from the view point of manufacture, operation cost and efficiency.

In the prior art, honeycomb adsorbing body was manufactured using organic fiber paper or organic adhesive as raw material, and the adsorbing body expands and contracts greatly during its operation by the change of temperature or humidity, has little heat-resistance, deteriorates by reactivation air of above 100°C and cannot endure a long time use.

The active silica gel honeycomb adsorbing body of the present invention, which is usable for a process air having 100% relative humidity, is manufactured as mentioned above by forming the extremely porous paper with bulk density of 0.3 - 0.6 g/cm³ (30 - 180 g/m²), mainly consisting of heat-resistant inorganic fiber selected from the group consisting of ceramic fiber, glass fiber, carbon fiber and mixture of them, into a honeycomb structure and then firing at a high temperature (300 - 700°C) in order to make the paper more porous by completely removing organic components in the paper and synthesizing active silica aerogel and simultaneously combining the aerogel in the paper. Therefore the adsorbent, active silica aerogel, is produced and combined in or on the inorganic fiber paper in an amount more than in the case of no firing, and the humidity adsorbing efficiency of the active silica gel honeycomb adsorbing body increases; and also it has an excellent heat-resistance with no possibility of being deteriorated by heat even if it is exposed to temperatures above 100°C for many hours, for reactivation or invigoration, and also its heat expansion coefficient is small with no possibility of deterioration in mechanical strength even by repetition of heating and cooling in its operation.

In the prior honeycomb-shaped laminated absorbing body impregnated with aqueous solution of deliquescent absorbent such as lithium chloride, there is possibility of forming dews and carrying-over of the absorbent together with dust by absorbing moisture in the passing gas, and it was not therefore able to be used for process air of relative humidity above 75%. But the active silica gel in the adsorbing body produced by the present invention, once it is saturated with adsorbed material, for example water, does not adsorb any further and does not produce water drops by dew condensation and carrying-over does not occur. So the adsorbing body of the present invention can be used with confidence even in the air of 100% relative humidity and it can tightly hold sufficient amount of active silica gel for a long time in fiber gaps and on the paper surface keeping its honeycomb laminate form.

Figs. 9, 10 and 11 show diameter distributions of micropores in the active silica gel in the rotors (1), (2) and (3) shown in Table 2, i.e., differential volume v/r (micropore volume [X 0.01 cc/g] per each micropore radius [Å]) and micropore volume, i.e., integral volume VP [X 0.1 cc/g] measured by "SORPTOMATIC SERIES 1800" of Carlo Erba. As shown in the drawings micropores of 20 - 40Å diameter are concentratedly produced and distributed. Its total surface area mounts up to almost 300 - 536m²/gr by BET method measurement and thus the rotor has an extremely excellent characteristic that it can strongly adsorb water molecules and also desorb them easily by heating.

As paper material was prepared in the range of thickness 0.1 - 0.3mm, wave length and wave height of single-faced corrugated sheet 2.5 - 4.5mm and 1.3 - 2.5mm respectively, laminated and formed, the developed surface area (total of obverse and reverse) of the formed rotor mounts up to about 2000 - 4000m²/m³. Thus it has an effect that when humidity-containing gas, for example air, is sent in small channels of the active silica gel honeycomb adsorbing body of the present invention, the gas contacts fully with the adsorbing body that forms small channel wall and humidity in the gas is adsorbed on the large effective surface of said adsorbing body. It also has an effect that dehumidified air or other gas can be obtained surely with a little operation cost as pressure loss is comparatively little when wind velocity at the rotor inlet is in the range of 0.5 - 5 m/sec.

## Claims

1. A method of manufacturing an active silica gel honeycomb adsorbing body usable for a process air having substantially 100% of relative humidity, comprising winding up and laminating a single-faced corrugated sheet of wave length 2.5 - 4.5mm and wave height 1.3 - 2.5mm made of inorganic fiber papers of bulk density 0.3 - 0.6 g/cm³ (30 ∼ 180 g/m²) and thickness 0.1 - 0.3mm into a honeycomb structure laminated body, impregnating the laminated body with aqueous water glass solution and soaking the laminated body in an acid having a concentration not exceeding 50% at a temperature of from 0 - 80°C after said water glass is dried in order to chemically synthesize and bind active silica gel having micropores whose diameter is mainly distributed in the range of 20 - 40 Å and whose surface area is 300 - 600m²/gr in fiber gaps and on the surface of the inorganic fiber paper by the chemical reaction of water glass and acid to obtain an adsorbing body mainly consisting of said active silica gel, wherein the laminated body is fired before impregnation with the aqueous water glass solution.

2. A method according to Claim 1, characterized in that the inorganic fiber paper comprises ceramic fiber, glass fiber, carbon fiber or a mixture thereof.

3. A method according to Claim 1, characterized in that the honeycomb structure laminated body is fired with air with reduced content of oxygen before the impregnation.

4. A silica gel honeycomb adsorbing body, made by a method according to any preceding claim.

5. A dehumidifier characterised by containing a silica gel honeycomb adsorbing body according to Claim 4.

## Patentansprüche

1. Verfahren zum Herstellen eines adsorbierenden Körpers aus aktivem Kieselgel mit Wabenstruktur, der für eine Prozeßluft mit im wesentlichen 100% relativer Feuchte verwendbar ist, das folgendes umfaßt: Aufwickeln und Kaschieren einer einseitig gewellten Bahn mit einer Wellenlänge von 2,5 - 4,5 mm und einer Wellenhöhe von 1,3 - 2,5 mm, die aus anorganischen Vulkanfibern von einer Schüttdichte von 0,3 - 0,6 g/cm³ (30 ∼ 180 g/m²) und einer Dicke von 0,1 - 0,3 mm hergestellt wird, zu einem kaschierten Körper mit Wabenstruktur, Imprägnieren des kaschierten Körpers mit wäßriger Wasserglaslösung und Einweichen des kaschierten Körpers in einer Säure mit einer Konzentration, die bei einer Temperatur von 0 - 80°C nicht über 50% hinausgeht, nachdem genanntes Wasserglas getrocknet ist, um aktives Kieselgel mit Mikroporen, deren Durchmesser hauptsächlich im Bereich von 20 - 40 Å verteilt ist und deren Oberfläche 300 - 600 m²/g beträgt, in Faserlücken und auf der Oberfläche der anorganischen Vulkanfibern durch die chemische Reaktion von Wasserglas und Säure chemisch zu synthetisieren und zu binden, um einen adsorbierenden Körper zu erhalten, der hauptsächlich genanntes aktives Kieselgel umfaßt, wobei der kaschierte Körper vor der Imprägnation mit der wäßrigen Wasserglaslösung gebrannt wird.

2. Verfahren nach Anspruch 1, dadurch gekennzeichnet, daß die anorganischen Vulkanfibern keramische Fasern, Glasfasern, Kohlenstoff-Fasern oder ein Gemisch davon umfassen.

3. Verfahren nach Anspruch 1, dadurch gekennzeichnet, daß der kaschierte Körper mit Wabenstruktur vor der Imprägnation mit Luft mit reduziertem Sauerstoffgehalt gebrannt wird.

4. Adsorbierender Körper aus Kieselgel mit Wabenstruktur, der durch ein Verfahren nach einem der vorangehenden Ansprüche hergestellt wird.

5. Entfeuchter, dadurch gekennzeichnet, daß er einen adsorbierenden Körper aus Kieselgel mit Wabenstruktur nach Anspruch 4 enthält.

## Revendications

1. Procédé de fabrication d'un corps adsorbant à alvéoles en gel de silice actif utilisable pour un air de traitement possédant essentiellement 100% d'humidité relative, comprenant le fait d'enrouler et de stratifier une feuille ondulée simple face de longueur d'onde de 2,5-4,5 mm et de hauteur d'onde de 1,3-2,5 mm, réalisée à partir de papiers contenant des fibres inorganiques, dont la masse volumique est de 0,3-0,6 g/cm³ (30 ∼ 180 g/m²) et dont l'épaisseur est de 0,1-0,3 mm, pour obtenir un corps stratifié de structure alvéolaire; le fait d'imprégner le corps stratifié avec une solution aqueuse de verre soluble et le fait de plonger le corps stratifié dans un acide dont la concentration ne dépasse pas 50%, à une température de 0-80°C, après avoir séché ledit verre soluble dans le but de synthétiser par voie chimique et de lier du gel de silice actif possédant des micropores dont le diamètre est principalement distribué dans le domaine de 20-40 Å et dont l'aire de surface est de 300-600 m²/g, dans les vides ménagés entre les fibres et à la surface du papier contenant des fibres inorganiques, à l'intervention de la réaction chimique du verre soluble et de l'acide pour obtenir un corps adsorbant constitué principalement dudit gel de silice actif, dans lequel le corps stratifié est soumis à la flamme avant son imprégnation avec la solution aqueuse de verre soluble.

2. Procédé selon la revendication 1, caractérisé en ce que le papier contenant des fibres inorganiques comprend des fibres céramiques, des fibres de verre, des fibres de carbone ou un mélange de ces fibres.

3. Procédé selon la revendication 1, caractérisé en ce que le corps stratifié à structure alvéolaire est soumis à la flamme avec de l'air possédant une teneur réduite en oxygène avant l'imprégnation.

4. Corps adsorbant à alvéoles en gel de silice, fabriqué par un procédé selon une revendication précédente quelconque.

5. Déshumidificateur caractérisé par le fait qu'il contient un corps adsorbant à alvéoles en gel de silice selon la revendication 4.
